# EUROPEAN PATENT APPLICATION

(11) **EP 1 881 548 A1**
(43) Date of publication of application: **23.01.2008**
(21) Application number: 06745674.9
(22) Date of filing: 25.04.2006
(51) Int. Cl.: H01M 8/02, H01M 4/86

(54) **FUEL CELL AND CATALYTIC LAYER ELECTRODE FOR FUEL CELL**

(30) Priority: 27.04.2005 JP 2005129548
(71) Applicant: KABUSHIKI KAISHA TOSHIBA, Tokyo 105-8001 (JP)
(72) Inventor: OOMICHI, Genta Toshiba Corporation, Tokyo 105-8001 (JP); SATO, Yuuichi Toshiba Corporation, Tokyo 105-8001 (JP); NEGISHI, Nobuyasu Toshiba Corporation, Tokyo 105-8001 (JP)
(74) Representative: Henkel, Feiler & Hänzel
(86) International application number: PCT/JP2006/308646
(87) International publication number: WO 2006/118107

(57) **Abstract**

Catalyst layer electrodes 12A, 12B have its two-dimensional projection plane shape formed in a rectangular shape, having cut-off fillet portions 13A, 13B cutting off part of the fillet so that terminal ends of mutually adjacent short side 12a and long side 12b of at least one corner do not meet orthogonally, and are compressed to a solid electrolyte membrane 11.

## Description

### Technical Field

The present invention relates to a flat fuel cell effective for operation of an electronic appliance showing a stable and favorable characteristic, and a fuel cell and a catalyst layer electrode for fuel cell for replenishing the fuel cell with liquid fuel and water.

### Background Art

A fuel cell has been attracting attention as a clean power generation system producing only water, in principle, as battery reaction product, and practically free from adverse effects on global environment. In particular, a direct methanol fuel cell (DMFC) having a solid electrolyte membrane and using liquid fuel is expected to be used as a fuel cell appropriate in a portable information appliance.

For example, the DMFC disclosed in Japanese Patent No. 3413111 is composed of a solid electrolyte membrane of proton conductivity, a catalyst layer electrode having catalyst-carrying carbon fine particles coated with ion exchange resin, and a gas diffusion layer for supplying reaction fuel to the catalyst layer electrode and collecting an electric charge. The DMFC has a single cell in a configuration of membrane electrode assembly (MEA) formed of an anode for producing charge and proton from fuel and water, and a cathode formed of a catalyst layer electrode having catalyst-carrying carbon fine particles coated with the ion exchange resin, and a gas diffusion layer for supplying oxygen to the catalyst layer electrode and transferring charge, and producing water from proton and oxygen. The DMFC is further provided with a liquid fuel tank in a peripheral area, and has single or plural single cells covered with a protective cover. The catalyst layer electrode has a cavity of small pores formed among secondary particles or tertiary particles of carbon fine particles, and functions as a diffusion route of reaction gas.

The DMFC is substantially enhanced in the power generation performance because the solid electrolyte membrane having a high ion conductivity is developed, and the reaction site in the catalyst layer is formed in three dimensions by using catalyst-carrying carbon fine particles coated with ion exchange resin of same type or different type as the solid electrolyte membrane as constituent material of the electrode catalyst layer.

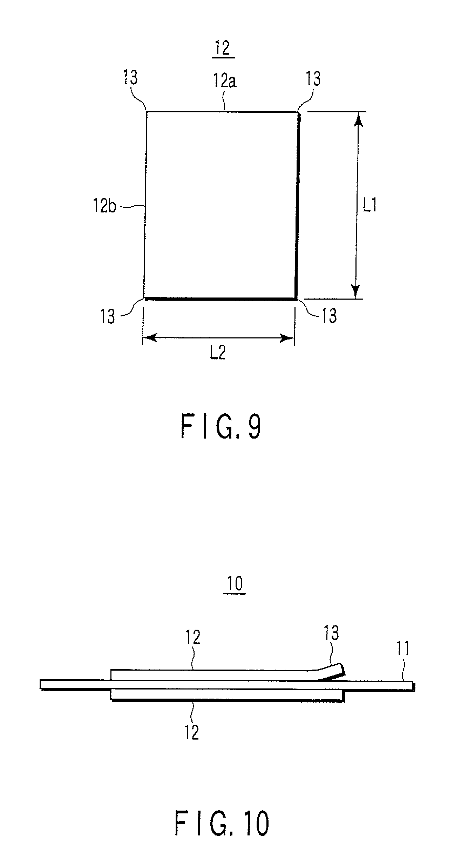

In an MEA 10 of the conventional DMFC, however, as shown in FIG. 10, a fillet 13 of a catalyst layer electrode 12 is likely to be peeled off from a solid electrolyte membrane 11, the area contributing to power generation reaction decreases, and sufficient power generation performance is hardly obtained. The catalyst layer electrode 12 is made of a base material such as carbon paper, carbon fiber, or felt material, and is compressed to the solid electrolyte membrane 11 by laminating process using a hot press or the like. However, since the adhesion strength thereof is weak, the catalyst layer electrode 12 may be peeled off from the fillet 13 when assembled into the battery main body. Accordingly, the expected reaction may not take place between the catalyst layer electrode 12 and solid electrode membrane 11, the battery characteristic may be partly impeded, and the output may not be obtained according to the design specification.

### Disclosure of Invention

The invention has been made to solve the problems of the prior art, and it is hence an object thereof to provide a fuel cell in which the compressed catalyst layer electrode is hardly peeled off from the solid electrolyte membrane, and which has a stable and excellent battery performance, and a catalyst layer electrode for fuel cell.

To solve the problems, the present inventors intensively studied the compression of the catalyst layer electrode and solid electrolyte membrane by paying attention to the shape of the fillet of the catalyst layer electrode, and succeeded in development of the catalyst layer electrode of the invention which is hardly peeled off from the solid electrolyte membrane.

The fuel cell of the invention includes a solid electrolyte membrane, and an anode and a cathode disposed oppositely across the solid electrolyte membrane as a single cell, and one or a plurality of the single cells are disposed along a plane to compose a fuel cell for a portable appliance. The catalyst layer electrode of at least one of the anode and cathode does not include a corner of an angle of 90° or less, and is integrated on each surface of the solid electrolyte membrane.

Each catalyst layer electrode of the anode and cathode has a substantially rectangular shape in a two-dimensional projection plane, having a cut-off fillet portion cutting off part of a fillet so that terminal ends of mutually adjacent sides of at least one corner do not meet at an angle of 90° or less, and is compressed to each side of the solid electrolyte membrane.

The catalyst layer electrode for fuel cell of the invention includes a solid electrolyte membrane, and an anode and a cathode disposed oppositely across the solid electrolyte membrane as a single cell, and one or a plurality of the single cells are disposed in a plane direction to compose a fuel cell. The catalyst layer electrode of at least one of the anode and cathode does not have an angle of 90° or less, and is integrated on each surface of the solid electrolyte membrane.

The catalyst layer electrode for fuel cell of the invention is a catalyst layer electrode used in the fuel cell, and is formed in a two-dimensional projection plane in a substantially rectangular shape, and has a cut-off fillet portion cutting off part of the fillet so that terminal ends of mutually adjacent sides at a corner may not meet at an angle of 90° or less.

Preferably, the two-dimensional projection plane shape of the catalyst layer electrode is pentagonal or further polygonal, or the two-dimensional projection plane shape of the cut-off fillet portion of the catalyst layer electrode is an arc. In the former case, the cut-off fillet portion has an angle of more than 90° (an obtuse angle), and on the two-dimensional projection plane, an area of the catalyst layer electrode is desirably 90% or more of the area of true square shape without the cut-off fillet portion. In the latter case, the radius of curvature R of the arc at the cut-off fillet portion is 1 mm or more, and on the two-dimensional projection plane, an area of the catalyst layer electrode is desirably 90% or more of the area of true square shape without the cut-off fillet portion. This is because, if chamfered excessively or the radius of curvature of the arc is too large, the area of the catalyst layer electrode becomes too small, and the reaction area responsible for power generation may be insufficient. Substantially, such problem does not occur as long as the area is 90% or more of the original rectangular shape.

The cut-off fillet portion may be formed by cutting off a triangular portion consisting of the vertex at the intersection of meeting place of terminal ends of mutually adjacent sides on the two-dimensional projection plane, and the bottom of a straight line obliquely crossing the adjacent sides remote by a specified distance from the intersection (FIG. 2), or by cutting off an outside portion of an arc at a circumscribing place of mutually adjacent sides remote by a specified distance from the intersection of meeting place of terminal ends of mutually adjacent sides on the two-dimensional projection plane (FIG. 3). In this manner, the cut-off fillet portion is formed by chamfering or cutting off the fillet of the catalyst layer electrode of true square shape shown in FIG. 9.

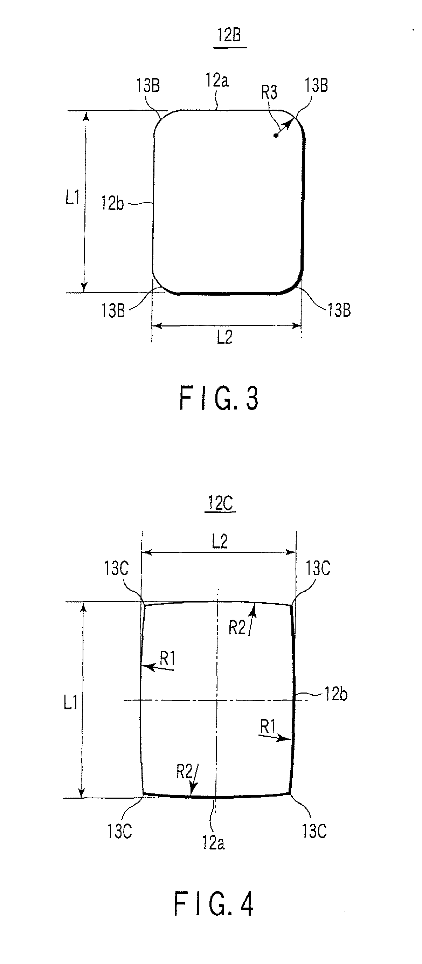

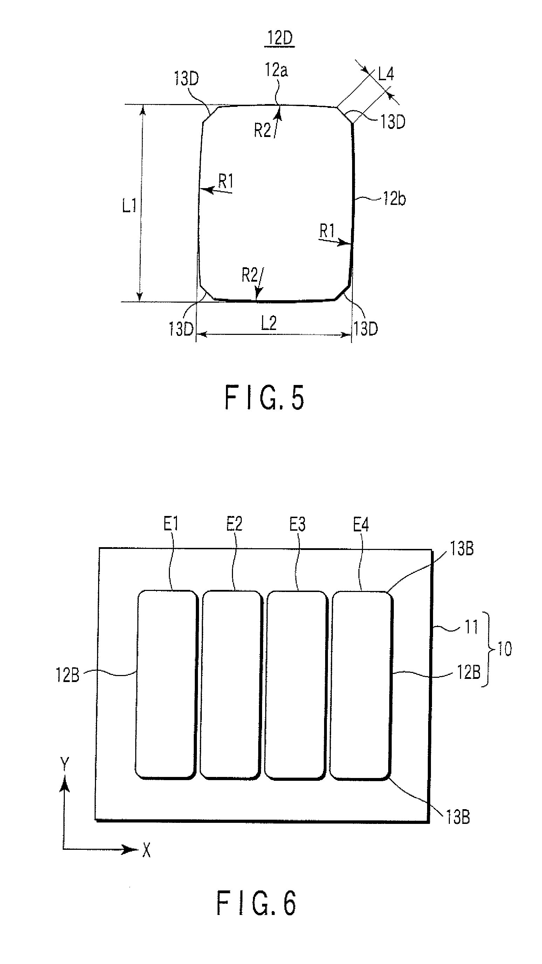

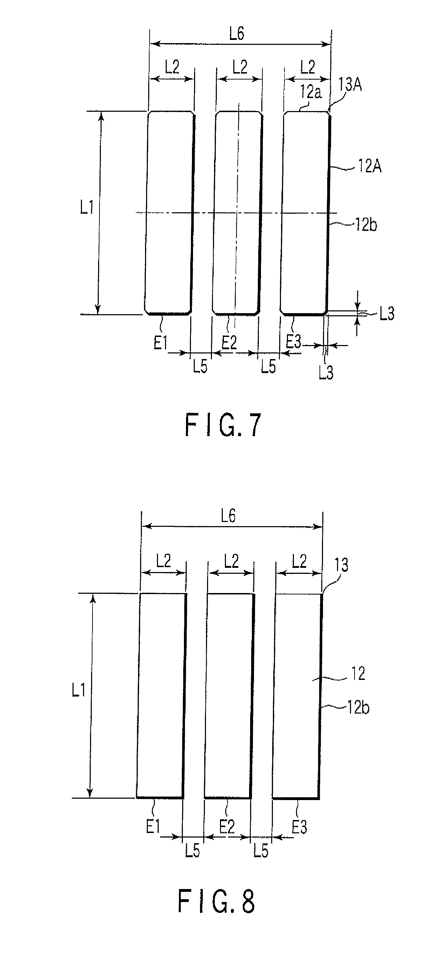

The invention also includes a catalyst layer electrode having a shape without the cut-off fillet portion. For example, on the two-dimensional projection plane, when each side of the catalyst layer electrode is formed in an outwardly warped (extended) curved shape, terminal ends of mutually adjacent sides always meet at an angle of more than 90° (FIG. 4). The curved shape of the side includes an arc of true circle, an arc of ellipse, a catenary, a cycloid, a cardioid, and other two-dimensional curves. In the catalyst layer electrode having sides of such curved shapes, by further cutting off the fillet, the effect may be further enhanced (FIG. 5). Moreover, by forming a plurality of catalyst layer electrodes having the same size and shape in parallel arrangement, and adhering them to one solid electrolyte membrane, a multitype membrane electrode assembly may be formed (FIGS. 6 and 7).

"Each catalyst layer electrode having a two-dimensional projection plane in a substantially rectangular shape" means that the shape includes square, rectangle, and pseudo rectangle in which at least one of four sides is outwardly warped (extended).

The catalyst layer electrode can be obtained by integrally forming, by compressing, a sheet of carbon containing base material after applying or impregnating a catalyst-containing substance thereto. Specifically, by hot pressing at temperature of 100 to 160°C, the catalyst layer electrode can be compressed to the solid electrolyte membrane. The carbon-containing base material includes a felt sheet of carbon fiber or carbon paper. In such sheet, catalyst-containing paste of specified component and amount is applied or impregnated, and the paste applied sheets are adhered together with the interposed solid electrolyte membrane, and compressed integrally by hot press.

### Brief Description of Drawings

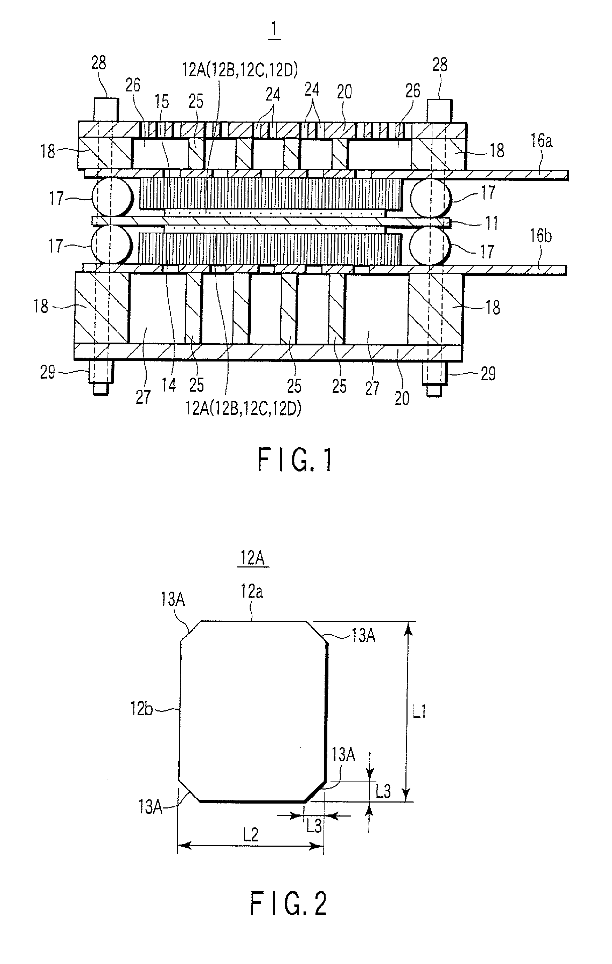

FIG. 1 is a side sectional view schematically showing the structure of a fuel cell.
FIG. 2 is a plan view of a catalyst layer electrode in Example 1.
FIG. 3 is a plan view of a catalyst layer electrode in Example 2.
FIG. 4 is a plan view of a catalyst layer electrode in Example 3.
FIG. 5 is a plan view of a catalyst layer electrode in a modified example.
FIG. 6 is a plan view of a multitype membrane electrode assembly having multiple catalyst layer electrodes.
FIG. 7 is a plan view of a catalyst layer electrode in Example 4.
FIG. 8 is a plan view of a catalyst layer electrode in Comparative Example 2.
FIG. 9 is a plan view of a catalyst layer electrode in Comparative Example 1.
FIG. 10 is a side view of a catalyst layer electrode compressed by hot press to a solid electrolyte membrane of a conventional fuel cell.

### Best Mode for Carrying Out the Invention

Various modes for carrying out the invention will be described below with reference to the accompanying drawings.

A general structure of a fuel cell for a portable appliance in an embodiment of the invention will be described with reference to FIG. 1. A fuel cell 1 is entirely covered with a protective cover 20, and has a single cell inside. The fuel cell 1 is formed integrally by tightening the internal single cell with a bolt 28 and a nut 29 by way of seal members 17, 18 from the protective cover 20 side. By the seal members 17, 18 and a plurality of spacers 25 as pressing members, various spaces and gaps are formed in the fuel cell 1. Of these spaces and gaps, for example, the cathode side space is used as a water storage chamber 26, and the anode side space is used as a fuel storage chamber 27. The cathode side protective cover 20 is provided with plural fine ventilation pores 24, which communicate with the space 26.

The single cell of the fuel cell includes a solid electrolyte membrane 11, an anode, and a cathode. The anode and cathode are disposed oppositely across the solid electrolyte membrane 11. The anode includes anode catalyst layer electrodes 12A (12B to 12D) and an anode gas diffusion layer 14. The anode catalyst layer electrodes 12A (12B to 12D) are intended to oxidize the fuel supplied through the gas diffusion layer 14 to take out electrons and protons from the fuel, and the anode catalyst layer electrodes 12A (12B to 12D) and gas diffusion layer 14 are stacked up to form a laminated structure. The anode catalyst layer electrodes 12A (12B to 12D) are composed of, for example, carbon powder containing catalyst. Examples of the catalyst include fine particles of transition metals such as platinum (Pt), iron (Fe), nickel (Ni), cobalt (Co), ruthenium (Ru), molybdenum (Mo), oxides thereof, or fine particles of their alloys. When the catalyst is formed of an alloy of ruthenium and platinum, it is preferred because inactivation of catalyst by adsorption of carbon monoxide (CO) can be prevented.

Preferably, the anode catalyst layer electrodes 12A (12B to 12D) contain fine particles of resin used in the solid electrolyte membrane 11 described below. This is because moving of generated protons is facilitated. The gas diffusion layer 14 is formed of a thin film made of, for example, porous carbon material, and specifically, it is formed of carbon paper or carbon fiber. A negative electrode lead 16b communicating with the end of the gas diffusion layer 14 is extending outward.

The cathode includes cathode catalyst layer electrodes 12A (12B to 12D) and a cathode gas diffusion layer 15. The cathode catalyst layer electrodes 12A (12B to 12D) are intended to reduce oxygen, and produce water by reaction between electrons and protons generated in the cathode catalyst layer electrodes 12A (12B to 12D), and they are formed in the same way as, for example, the anode catalyst layer electrodes 12A (12B to 12D) and gas diffusion layer 14. That is, the cathode has a laminated structure formed by stacking up the cathode catalyst layer electrodes 12A (12B to 12D) formed of carbon powder including catalyst and the cathode gas diffusion layer 15 (gas permeation layer) formed of porous carbon material, sequentially from the solid electrolyte membrane 11 side. The catalyst used in the cathode catalyst layer electrodes 12A (12B to 12D) is the same as that of the anode catalyst layer electrodes 12A (12B to 12D), and the cathode catalyst layer electrodes 12A (12B to 12D) may contain fine particles of resin used in the solid electrolyte membrane 11 in the same way as the anode catalyst layer electrodes 12A (12B to 12D). A positive electrode lead 16a communicating with the end of the gas diffusion layer 15 is extending outward.

Various shapes of the catalyst layer electrodes 12A (12B to 12D) will be explained below.

The shape of the catalyst layer electrode is a two-dimensional projection plane shape of the catalyst layer electrode 12A in pentagonal or further polygonal shape as shown in FIG. 2, or a two-dimensional projection plane shape of a cut-off fillet portion 13B of the catalyst layer electrode 12B in an arc as shown in FIG. 3. In the former case 12A, the cut-off fillet portion has an angle of more than 90°, and on the two-dimensional projection plane, an area of the catalyst layer electrode is desirably 90% or more of the area of true square shape without a cut-off fillet portion. In the latter case 12B, the radius of curvature R of the arc at the cut-off fillet portion is 1 mm or more, and on the two-dimensional projection plane, an area of the catalyst layer electrode is desirably 90% or more of the area of true square shape without a cut-off fillet portion. This is because, if chamfered excessively or the radius of curvature of the arc is too large, the area of the catalyst layer electrode becomes too small, and the reaction area responsible for power generation may be insufficient. Substantially, such problem does not occur as long as the area is 90% or more of the original rectangular shape.

The cut-off fillet portion 13A may be formed, as shown in FIG. 2, by cutting off a triangular portion consisting of the vertex at the orthogonal intersection of meeting place of terminal ends of mutually adjacent sides on the two-dimensional projection plane, and the bottom of a straight line obliquely crossing the adjacent sides remote by a specified distance from the orthogonal intersection. Alternatively, the cut-off fillet portion 13B may be formed, as shown in FIG. 3, by cutting off an outside portion of an arc at a circumscribing place of mutually adjacent sides remote by a specified distance from the orthogonal intersection of meeting place of terminal ends of mutually adjacent sides on the two-dimensional projection plane. In this manner, the cut-off fillet portion is formed by chamfering or cutting off the fillet of the catalyst layer electrode of true square shape shown in FIG. 7.

The invention also includes a catalyst layer electrode having a shape without a cut-off fillet portion. For example, as shown in FIG. 4, on the two-dimensional projection plane, when the sides 12a, 12b of the catalyst layer electrode 12C is formed in an outwardly warped (extended) curved shape, terminal ends 13C of mutually adjacent sides always meet at an angle of more than 90°. The curved shape of the side includes an arc of true circle, an arc of ellipse, a catenary, a cycloid, a cardioid, and other two-dimensional curves. In the catalyst layer electrode 12D having sides 12a, 12b of such curved shapes, as shown in FIG. 5, by further cutting off the fillet to form a cut-off fillet portion 13D, the effect may be further enhanced.

The solid electrolyte membrane 11 is intended to transfer the protons generated in the anode catalyst layer electrodes 12A (12B to 12D) to the cathode catalyst layer electrodes 12A (12B to 12D), and is composed of a material not having electron transfer property and capable of transferring protons. For example, the solid electrolyte membrane 11 is made of a resin film of polyperfluorosulfonic acid system, and specific examples thereof include Nafion film of Du Pont, Flemion film of Asahi Glass, and Aciplex film of Asahi Kasei Chemicals. Aside from the resin film of polyperfluorosulfonic acid system, the solid electrolyte membrane 11 may be also made of other proton transferring materials such as copolymer film of trifluorostyrene derivative, polybenzimidazole film impregnated with phosphoric acid, aromatic polyether ketone sulfonic aid film, or aliphatic hydrocarbon resin film.

Further, on one solid electrolyte membrane 11, plural catalyst layer electrodes may be arranged and adhered in parallel, and a multitype membrane electrode assembly may be formed. In the embodiment, as shown in FIG. 6, four catalyst layer electrodes E1, E2, E3, and E4 are arranged in parallel at equal pitch intervals in the width direction (X-direction). The catalyst layer electrodes E1 to E4 are the catalyst layer electrodes 12B having an R chamfered fillet 13B as shown in FIG. 3 and an aspect ratio of 3 to 8.

At the opposite side of the solid electrolyte membrane 11 of the anode gas diffusion layer 14, for example, a fuel storage chamber 27 having a liquid fuel storage space formed inside is provided adjacently to the anode gas diffusion layer 14. By using a liquid fuel of high concentration, the fuel cell volume efficiency is enhanced, and the size and weight of a fuel cartridge carried together with the fuel cell can be reduced. A fuel feed port (not shown) penetrating through the seal member 18 communicates with the fuel storage chamber 27, into which liquid fuel is supplied. The fuel feed port is provided with a detachable lid (not shown) for closing the fuel feed port 21. The fuel storage chamber 27 and lid are made of rigid plastics not swollen by liquid fuel, such as polytetrafluoroethylene, polystyrene, polypropylene, or polycarbonate. The fuel storage chamber 27 and lid may be also made of a metal material excellent in corrosion resistance, such as stainless steel or nickel metal. When the fuel storage chamber 27 is formed of a metal material, the fuel storage chamber 27 is disposed properly so as not to allow short circuit of the anode catalyst layer electrode 12A and cathode catalyst layer electrode 12A, or an insulating member (not shown) must be inserted in order to prevent short circuit. To take out electrons to the negative electrode lead 16b from the gas diffusion layer 14, a plurality of spacers 25 (protruding structure) are provided so as to project from the protective cover 20 toward the gas diffusion layer 14, and as a result the power generation energy may be utilized efficiently. The negative electrode lead 16b has multiple openings and gaps, and is formed in a shape not to impede the gas diffusion.

The inside of the fuel storage chamber 27 may be filled with a liquid fuel impregnating material for impregnating and holding the liquid fuel. The liquid fuel impregnating material is formed of, for example, porous polyester fiber, specifically Univex manufactured by Unitika, Ltd. The liquid fuel impregnating material is disposed between the anode gas diffusion layer 14 and fuel opening (not shown), and has a function of supplying a proper amount of fuel to the anode. Aside from polyester fiber, the liquid fuel impregnating material may be also formed of various water absorbing polymers such as acrylic acid resin, or sponge or fiber assembly which is a liquid holding material having liquid permeable property. The liquid fuel impregnating material is effective for supplying a proper amount of fuel regardless of the position of the main body. Examples of the liquid fuel include methanol aqueous solution, ethanol aqueous solution, propanol fuel such as propanol aqueous solution and pure propanol, glycol fuel such as glycol aqueous solution and pure glycol, dimethyl ether, formic acid aqueous solution, sodium formate aqueous solution, acetic acid aqueous solution, ethylene glycol aqueous solution, and other organic aqueous solution containing hydrogen. In particular, methanol aqueous solution is preferred because the number of carbon atoms is one, carbon dioxide is generated by reaction, power generation at low temperature is possible, and it can be easily manufactured from industrial waste. Anyway, a liquid fuel suited to a fuel cell is used. The cathode side protective cover 20 is provided with, for example, multiple ventilation holes 24 opened for supplying outside air to the cathode gas diffusion layer 15 through gaps by spontaneous diffusion. These ventilation holes 24 are opened to pass outside air, and are formed in a proper shape not impeding passing of outside air, and preventing invasion or contact of fine or needle-like foreign matter from outside into the cathode gas diffusion layer 15.

The invention has been described herein by showing various embodiments, but the invention is not limited to these embodiments alone, but may be modified and combined in various manners.

### [Examples 1, 2, 3 and Comparative Example 1]

Carbon paper was used as the base material, paste containing catalyst was applied thereon, and the resultant material was adhered to both sides of a solid electrolyte membrane, and integrally formed and compressed by hot press, to obtain power generation element structures of Examples 1 to 3 and Comparative Example 1 in specified shape.

A catalyst layer electrode 12A having a shape shown in FIG. 2 was used in Example 1, a catalyst layer electrode 12B having a shape shown in FIG. 3 in Example 2, a catalyst layer electrode 12C having a shape shown in FIG. 4 in Example 3, and a catalyst layer electrode 12 having a shape shown in FIG. 9 in Comparative Example 1. Length L1 of a longer side 12b was 40 mm, length L2 of a shorter side 12a was 30 mm, chamfering size L3 of the cut-off fillet portion 13A in Example 1 was 1 mm, radius of curvature R3 of an arc of the cut-off fillet portion 13B in Example 2 was 1 mm, and radius of curvature R2 of the shorter side 12a was 100 mm and radius of curvature R1 of the longer side 12b was 200 mm in Example 3. In Examples 1, 2, 3 and Comparative Example 1, the electrodes were hot pressed in the condition of temperature of 120°C, and pressure of 300 MPa/cm². After hot pressing, the total thickness of solid electrode membrane, anode catalyst layer electrode, and cathode catalyst layer electrode was about 1.5 mm.

In the following condition, the fuel cells of Examples 1, 2, 3 and Comparative Example 1 were operated to generate power, and the battery performance was compared before and after the long-term power generation operation.

The battery was assembled and filled with fuel, and the internal resistance was measured, which was set as an initial internal resistance. The battery was tested by long-term power generation operation for 500 hours at a constant voltage load of 0.3V. Based on the value of power immediately after start of the test, the value of power after 500 hours was determined as retention rate. The internal resistance after the test was measured, and the change of the internal resistance compared before and after the long-term power generation operation was determined. Test results are shown in Table 1.

**Table 1**

| | Battery performance test | | |
|---|---|---|---|
| | Initial internal resistance (mΩ) | Internal resistance after test (mΩ) | Power retention rate (%) |
| Example 1 | 80 | 95 | 85 |
| Example 2 | 76 | 90 | 83 |
| Example 3 | 79 | 92 | 82 |
| Comparative Example 1 | 78 | 160 | 51 |

In Table 1, comparing the internal resistance before and after the long-term power generation operation, the internal resistance (160 mΩ) of Comparative Example 1 was higher than those of Examples 1, 2, 3 (95 mΩ, 90 mΩ, 92 mΩ). This is thought to be because the internal resistance was increased due to drop of electrode adhesion strength by aging effects of the long-term power generation test. The power retention rate in Comparative Example 1 was only 51%, while high rates were shown in others, that is, 85% in Example 1, 83% in Example 2, and 82o in Example 3. Hence, Examples 1, 2, 3 were proved to maintain sufficient battery performance even after the long-term power generation operation.

### [Example 4 and Comparative Example 2]

Carbon paper was used as the base material, paste containing catalyst was applied thereon, and the resultant material was adhered to both sides of a solid electrolyte membrane, and integrally formed and compressed by hot press, to obtain membrane electrode assemblies in a specified shape as shown in FIG. 7 as Example 4, and as shown in FIG. 8 as Comparative Example 2.

Example 4 is a multitype membrane electrode assembly having catalyst layer electrodes 12A in a shape shown in FIG. 2 arranged in parallel in three rows, and Comparative Example 2 is a multitype membrane electrode assembly having catalyst layer electrodes 12 in a shape shown in FIG. 9 arranged in series in three rows. Length L1 of a longer side 12b was 40 mm, length L2 of a shorter side 12a was 9 mm, chamfering size L3 of the cut-off fillet portion in Example 4 was 1 mm, mutual interval L5 between electrodes was 1.5 mm, and total width L6 was 30 mm. In both Example 4 and Comparative Example 2, the electrodes were hot pressed in the condition of temperature of 125°C, and pressure of 300 MPa/cm². After hot pressing, the total thickness of solid electrode membrane, anode catalyst layer electrode, and cathode catalyst layer electrode was about 1.5 mm.

The fuel cells were tested by power generation operation in the same condition as in Examples 1 to 3 and Comparative Example 1. Test results are shown in Table 2.

**Table 2**

| | Battery performance test | | |
|---|---|---|---|
| | Initial internal resistance (mΩ) | Internal resistance after test (mΩ) | Power retention rate (%) |
| Example 4 | 256 | 300 | 79 |
| Comparative Example 2 | 260 | 380 | 50 |

In Table 2, comparing the internal resistance before and after the long-term power generation operation, the internal resistance (380 mΩ) of Comparative Example 2 was higher than that (300 mΩ) of Example 4. This is thought to be because the internal resistance was increased due to drop of electrode adhesion strength by aging effects of the long-term power generation test. The power retention rate in Comparative Example 2 was only 50%, while a high rate of 79% was obtained in Example 4. Hence, Example 4 was proved to maintain sufficient battery performance even after the long-term power generation operation.

According to the invention, since the compressed catalyst layer electrode is hardly peeled off from the solid electrolyte membrane, a favorable battery performance is obtained stably, and an output characteristic free from fluctuation can be obtained as a power source for mobile appliances such as portable telephone, notebook personal computer, and portable game machine.

The fuel cell of the invention can maintain and recover the battery performance by a simple operation, and is very useful as a power source to be assembled in mobile appliances such as portable telephone, notebook personal computer, and portable game machine.

## Claims

1. A fuel cell **characterized by** comprising a solid electrolyte membrane, and an anode and a cathode disposed oppositely across the solid electrolyte membrane as a single cell, one or a plurality of the single cells being disposed along a plane,
wherein a catalyst layer electrode of at least one of the anode and cathode does not include a corner of an angle of 90° or less, and is integrated on each surface of the solid electrolyte membrane.

2. The fuel cell according to claim 1, **characterized in that** the catalyst layer electrode of at least one of the anode and cathode has a substantially rectangular shape in a two-dimensional projection plane, having a cut-off fillet portion cutting off part of a fillet so that terminal ends of mutually adjacent sides of at least one corner do not meet at an angle of 90° or less.

3. The fuel cell according to claim 1, **characterized in that** the shape of the catalyst layer electrode in a two-dimensional projection plane is pentagonal or further polygonal.

4. The fuel cell according to claim 3, **characterized in that** the cut-off fillet portion of the polygon has an obtuse angle of more than 90°, and on the two-dimensional projection plane, an area of the electrode is 90% or more of an area of true square shape not having the cut-off fillet portion.

5. The fuel cell according to claim 2, **characterized in that** the shape of the cut-off fillet portion of the catalyst layer electrode is an arc in a two-dimensional projection plane.

6. The fuel cell according to claim 5, **characterized in that** radius of curvature of the arc at the cut-off fillet portion is 1 mm or more, and on the two-dimensional projection plane, an area of the electrode is 90% or more of an area of true square shape not having the cut-off fillet portion.

7. The fuel cell according to claim 2, **characterized in that** the cut-off fillet portion is formed by cutting off a triangular portion consisting of a vertex at an intersection of meeting place of terminal ends of mutually adjacent sides on the two-dimensional projection plane, and a bottom of a straight line obliquely crossing the adjacent sides remote by a specified distance from the intersection.

8. The fuel cell according to claim 2, **characterized in that** the cut-off fillet portion is formed by cutting off an outside portion of an arc at a circumscribing place of mutually adjacent sides remote by a specified distance from the intersection of meeting place of terminal ends of the mutually adjacent sides on the two-dimensional projection plane.

9. The fuel cell according to claim 1,
**characterized in that** the catalyst layer electrode of at least one of the anode and cathode has a two-dimensional projection plane in a substantially rectangular shape, having at least one side as an externally warped curve.

10. The fuel cell according to claim 1, **characterized in that** the catalyst layer electrode is integrated with the solid electrolyte membrane by either one of compressing, fusing, and adhesion.

11. The fuel cell according to claim 1, **characterized in that** the catalyst layer electrode is compressed to the solid electrolyte membrane by hot pressing at a temperature of 100 to 160°C, by applying or impregnating a catalyst-containing substance in a sheet of carbon-containing base material.

12. A catalyst layer electrode for a fuel cell, **characterized by** comprising a solid electrolyte membrane, and an anode and a cathode disposed oppositely across the solid electrolyte membrane as a single cell, the catalyst layer electrode being a catalyst layer electrode of at least one of the anode and cathode used in a fuel cell having one or a plurality of the single cells disposed along a plane,
wherein the catalyst layer electrode of at least one of the anode and cathode does not have an angle of 90° or less.

13. A catalyst layer electrode used in the fuel cell according to claim 1, **characterized in that** a two-dimensional projection plane is a substantially rectangular shape, having a cut-off fillet cutting off part of the fillet so that terminal ends of mutually adjacent sides of the fillet do not meet at an angle of 90° or less.
